# EUROPEAN PATENT SPECIFICATION

(11) **EP 0 617 567 B1**
(45) Date of publication and mention of the grant of the patent: **06.11.1996**
(21) Application number: 94104797.9
(22) Date of filing: 25.03.1994
(51) Int. Cl.: H05B 41/29, H02M 7/538

(54) **Ballast for discharge lamp with improved crest factor**
Vorschaltgerät für Entladungenslampen, mit verbessertem Formfaktor
Ballast pour lampes à décharge avec un facteur de forme amélioré

(30) Priority: 26.03.1993 JP 68182/93
(43) Date of publication of application: 28.09.1994
(73) Proprietor: TOSHIBA LIGHTING & TECHNOLOGY CORPORATION, Shinagawa-ku, Tokyo (JP)
(72) Inventor: Kosa, Kiyoteru, Yokosuka-shi, Kanagawa-ken (JP); Nakaya, Fuminori, Miura-shi, Kanagawa-ken (JP); Uratani, Kazuyuki, Tokyo (JP)
(74) Representative: Henkel, Feiler, Hänzel & Partner

(56) References cited:
- EP-A- 0 093 469
- EP-A- 0 490 330
- GB-A- 2 261 779
- US-A- 5 223 767

## Description

The present invention relates to an apparatus for operating a plurality of discharge lamps, and more specifically to the improvement of the crest factor of such lamps.

In a conventional apparatus for operating a discharge lamp, power from a commercial electrical outlet is converted once into a DC current, and then into a high-frequency current by an inverter, and the high-frequency current is applied to the discharge lamp such as a fluorescent lamp, thereby lighting the discharge lamp.

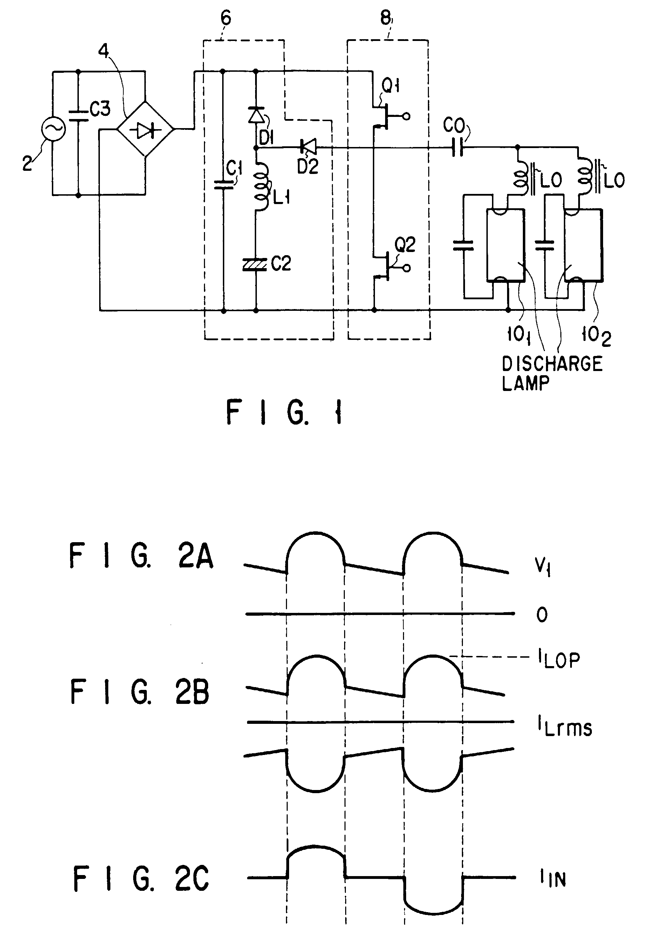

FIG. 1 is a circuit diagram showing a conventional example of such a discharge lamp. An alternating current supplied from a power tap 2 is rectified by a diode bridge circuit 4, and then input to an inverter circuit 8 via a partial smoothing circuit 6 (trough portions of a waveform are filled) to be converted into a high-frequency current. The high-frequency current output from the inverter circuit 8 is further converted into a high voltage by a set of two resonance circuits consisting of a capacitor C0, and two coils L0 connected in parallel. The high voltage is supplied to discharge lamps 10₁ and 10₂ to light them up. In this figure, only two discharge lamps, that is, 10₁ and 10₂, are shown, but when three or more lamps are connected, they are connected in parallel as in the case of the lamps 10₁ and 10₂, and the redundant explanation thereof will be omitted.

The partial smoothing circuit 6 has the structure in which a capacitor C1 is connected in parallel to the serial circuit consisting of a diode D1, a coil L1 and a capacitor C2, and a cathode of a diode D2 is connected to the connecting point between the coil L1 and the diode D1. With this structure, the capacitor C2 is charged via the diode D2 while a current is supplied from the diode bridge 4 to the inverter circuit 8. When a current supplied from the diode bridge circuit 4 decreases, the charge stored in the capacitor C2 is supplied to the inverter circuit 8 via the coil L1 and the diode D1. Thus, the trough portions (reduced portions) of the current flowing to the inverter circuit 8 is filled.

The inverter circuit 8 is a serial circuit consisting of direct field effect transistors (FET) Q1 and Q2. When the FETs Q1 and Q2 are switched on by a control circuit (not shown), an input current is converted into a high-frequency current. Note that the capacitor C3 provided on the power outlet side is used for eliminating noise.

In the case of a waveform of a voltage (V₁) input to the inverter circuit 8 shown in FIG. 2A, supposing that the effective value of the current flowing through the discharge lamps 10₁ and 10₂ is I_{Lrms} shown in FIG. 2B and its peak current value is I_{LOP}, a value I_{LOP}/I_{Lrms} is called a crest factor, which indicates the amount of an increase/decrease of current flowing through the discharge lamps 10₁ and 10₂. In the conventional apparatus shown in FIG. 1, current obtained by smoothing an output from the diode bridge circuit 4 may have a pulse wave such as shown in FIG. 2A. In this case, the problem of crest factor occurs. That is, as the crest factor decreases, the amount of an increase/decrease in current flowing through the discharge lamp 10₁ and 10₂ is made smaller; therefore it is possible to light the lamps at a high efficiency. In order to decrease the crest factor, for example, the capacitor C0 and the coil L0 which constitute each resonance circuit should only be adjusted.

In reality, however, capacitors, as well as coils, differ from an individual to another in performance, and therefore in the conventional apparatus, in which resonance circuits corresponding to the discharge lamps 10₁ and 10₂ are arranged in parallel, exhibit a variance among crest factors of the discharge lamps 10₁ and 10₂ due to the variance of the performances of the resonance circuits. As a result, the crest factor of either one of the discharge lamps deteriorates, thus lowering the lighting efficiency.

Note that FIG. 2C is a diagram showing the waveform of an alternating current input from the commercial power outlet 2 to the diode bridge circuit 4.

As described, the conventional apparatus for operating a discharge lamp operates in the following manner. That is, a commercial power is rectified, and thus smoothed pulse is converted into a high-frequency current by an inverter. Further, the high-frequency current is supplied to a plurality of discharge lamps to light up each one of them. In such an apparatus, as the crest factor is smaller, a higher lighting efficiency can be obtained. However, due to the variance in performance between the capacitors or coils which constitute each resonance circuit, a variance between the crest factors of the discharge lamps is created. As a result, the crest factor of some of the discharge lamps is increased, thus degrading the lighting efficiency.

An object of the present invention is to provide an apparatus for operating a plurality of discharge lamps, in which the lighting efficiency of each of all discharge lamps can be easily made at a given value or higher, by decreasing the crest factors of the discharge lamps to a given level or lower, and narrowing the variance between the crest factors.

More specifically, the above object of the present invention is to provide an apparatus for operating a plurality of discharge lamps comprising: a rectification circuit, connected to alternating current power means, for rectifying an alternating current supplied from the alternating current power means; inverter means, connected to the rectification circuit, for changing a current obtained form the rectification circuit into a high-frequency current; a resonance circuit for converting the high-frequency current obtained from the inverter means, into a high voltage; and a plurality of discharge lamps connected in parallel between output terminals of the resonance circuit.

Another object of the present invention is to provide an apparatus for operating a plurality of discharge lamps comprising: a rectification circuit, connected to alternating current power means, for rectifying an alternating current supplied from the alternating current power means; a partial smoothing circuit, connected in parallel to an output of the rectification circuit, for partially smoothing a current obtained from the rectification circuit, the partial smoothing circuit including at least a capacitor, and a capacitance of the capacitor rendered small such that its stored charge is substantially zero, when a current output from the rectification circuit decreases; an inverter circuit, connected to the partial smoothing circuit, for changing an output smoothed by the partial smoothing circuit, into a high-frequency current; a resonance circuit for converting the high-frequency current output from the inverter circuit, into a high voltage; and a plurality of discharge lamps connected in parallel between output terminals of the resonance circuit.

Still another object of the present invention is to provide an apparatus for operating a plurality of discharge lamps comprising: a rectification circuit, connected to alternating current power means, for rectifying an alternating current supplied from the alternating current power means; inverter means connected to the alternating current power means, for changing a current obtained from alternating current power means, into a high-frequency current; a resonance circuit for converting the high-frequency produced by the inverter circuit, into a high voltage; and a plurality of high-frequency load means connected in parallel between output terminals of the resonance circuit.

Still another object of the present invention is to provide a power converting apparatus comprising: a rectification circuit, connected to alternating current power means, for rectifying an alternating current supplied from the alternating current power means; a partial smoothing circuit, connected in parallel to an output of the rectification circuit, for partially smoothing a current obtained from the rectification circuit, the partial smoothing circuit including at least a capacitor, and a capacitance of the capacitor rendered small such that its stored charge is substantially zero, when a current output from the rectification circuit decreases; inverter means, connected to the partial smoothing circuit, for changing an output smoothed by the partial smoothing circuit, into a high-frequency current; resonance circuit means for converting the high-frequency current output from the inverter circuit, into a high voltage; and a plurality of high-frequency load means connected in parallel between output terminals of the resonance circuit means.

This invention can be more fully understood from the following detailed description when taken in conjunction with the accompanying drawings, in which:
FIG. 1 is a circuit diagram illustrating an example of the conventional apparatus for operating a discharge lamp;
FIGS. 2A to 2C are diagrams showing waveforms of voltage and current appearing at each section of the apparatus shown in FIG. 1;
FIG. 3 is a circuit diagram illustrating the first embodiment of the discharge lamp operating apparatus according to the present invention;
FIG. 4 is a diagram showing waveforms of voltage and current appearing at each section of the apparatus shown in FIG. 3;
FIG. 5 is a circuit diagram illustrating the second embodiment of the discharge lamp operating apparatus according to the present invention;
FIG. 6 is a diagram showing waveforms of voltage and current appearing at each section of the apparatus shown in FIG. 5;
FIG. 7 is a circuit diagram illustrating the third embodiment of the discharge lamp operating apparatus according to the present invention;
FIG. 8 is a circuit diagram illustrating the fourth embodiment of the discharge lamp operating apparatus according to the present invention; and
FIG. 9 is a circuit diagram illustrating the fifth embodiment of the discharge lamp operating apparatus according to the present invention.

Embodiments of the present invention will now be described in detail with reference to drawings. Throughout the descriptions of the embodiments, the same structural elements will be designated by the same reference numerals, and the explanations therefore will not be repeated.

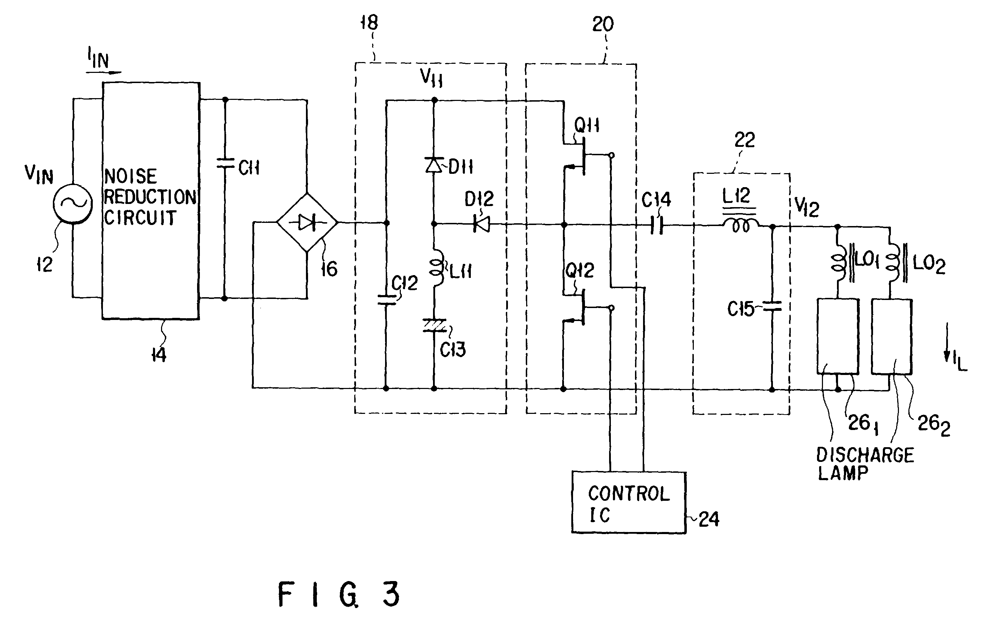

FIG. 3 is a circuit diagram showing an embodiment of the discharge lamp lighting device of the present invention. As shown in this figure, a diode bridge circuit 16, which serves to rectify an alternating current and convert it into a direct current, is connected to a commercial power outlet 12 via a noise reduction circuit 14 and a noise removing capacitor C11. A partial smoothing circuit 18, an inverter circuit 20 and a resonance circuit 22 for generating a high voltage are connected to an output of the diode bridge circuit 16.

The partial smoothing circuit 18 carries out a dither operation to compensate for reduced portions of a waveform of the current supplied to the inverter circuit 20, and consists of a capacitor C12; a serial circuit having a diode D11, a coil L11 and a capacitor C13; and a diode D12. The diode D12 has a cathode connected between an anode of the diode D11 and the coil L11, and an anode connected to one end of a coupling capacitor C14.

The inverter circuit 20 converts an input current into a high-frequency current, and is a circuit in which FETs Q11, Q12 (and the like) are connected in series. This circuit consisting of the FETs Q11 and Q12, is connected between the output terminals of the diode bridge circuit 16. As the FETs Q1 and Q2 are both switched on by a control IC 24, which constitutes a control circuit, the input current is converted into the high-frequency current.

The resonance circuit 22 consisting of a coil L12 and a capacitor C15, is connected between the other end of the coupling capacitor C14 and the other output terminal of the diode bridge circuit 16. Further, connected in parallel to the resonance circuit 22, are serial circuits consisting of current reduction elements such as choke coils L0₁ and L0₂, and discharge lamps 26₁ and 26₂ such as fluorescent lamps. It should be noted that this figure shows two series of discharge lamps 26₁ and 26₂ and choke coils L0₁ and L0₂; however when there are three or more series, discharge lamps and choke coils are connected in parallel to the discharge lamps 26₁ and 26₂ and the choke coils L0₁ and L0₂, and the explanation therefor will be omitted.

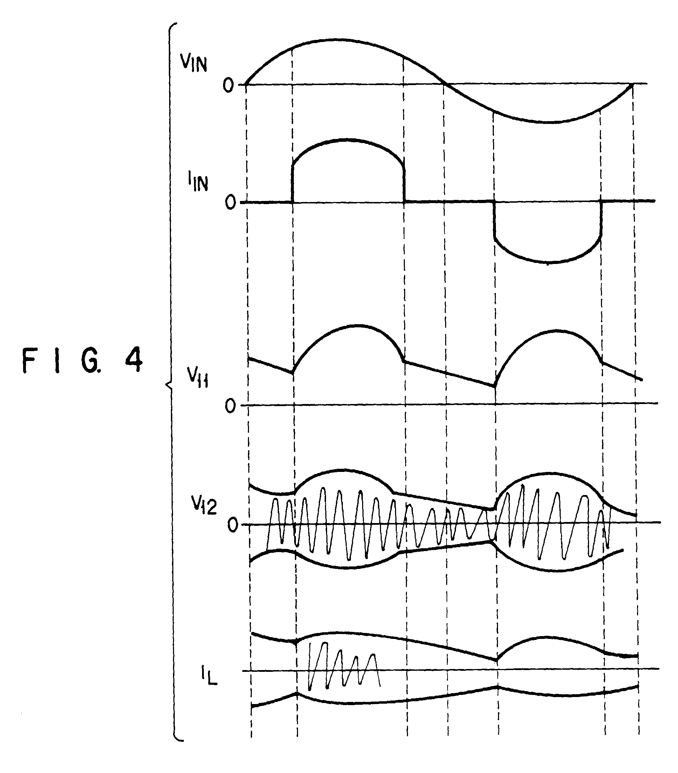

The operation of this embodiment will be described with reference to the waveforms shown in FIG. 4.

An alternating current (I_{IN}) supplied from the commercial power outlet 12 having a voltage V_{IN}, is rectified by the diode bridge circuit 16, and then input to the inverter circuit 20 via the partial smoothing circuit 18. The inverter circuit 20 converts a pulse current supplied from the partial smoothing circuit 18 into a high-frequency current, and outputs to the resonance circuit 22. The high-frequency current output from the inverter circuit 22 is converted into a high voltage (V₁₂) by the resonance circuit 22 consisting of the capacitor C15 and the coil L12. Thereafter, the high voltage is supplied (I_{L}) to the discharge lamp 26₁ and 26₂ via the choke coils L0₁ and L0₂ for current reduction, thereby lighting these lamps.

The partial smoothing circuit 18 charges the capacitor C13 via the diode D12 while current is being supplied from the diode bridge circuit 16 to the inverter circuit 20. When the current output from the diode bridge circuit 16 decreases, charge stored in the capacitor C13 is supplied to the inverter circuit 20 via the coil L11 and the diode D11. Thus, the partial smoothing circuit 18 fills the troughs (reduced portions) of the current flowing to the inverter circuit 20 (V₁₁).

In this embodiment, there is only one resonance circuit 22 common for the discharge lamps 26₁ and 26₂. With this structure, the values of the crest factors of both lamps 26₁ and 26₂ can be adjusted by changing the values of the coil L12 and capacitor C15 constituting this resonance circuit 22. Therefore, the variance between the crest factors of the discharge lamps can be made narrower (0.1% or less) than by the conventional technique, and the crest factors of both the discharge lamps 26₁ and 26₂ can be easily rendered a given value or lower. Consequently, the lighting efficiency of each of the discharge lamps 26₁ and 26₂ can be easily made high.

In this embodiment, the capacity of the capacitor C12 which constitutes the partial smoothing circuit 18 is set smaller than that of the conventional apparatus shown in FIG. 1, to such a level that the charge on the capacitor C12 is rendered about 0 when the current output from the diode bridge circuit 16 decreases. Thus, even in the period of a trough of current supplied to the capacitor C12, current can be supplied from the diode bridge circuit 16, and therefore the alternating current input to the diode bridge circuit 16 will be shaped into a sine wave form, which has the effect of removing distortion of the input alternating current.

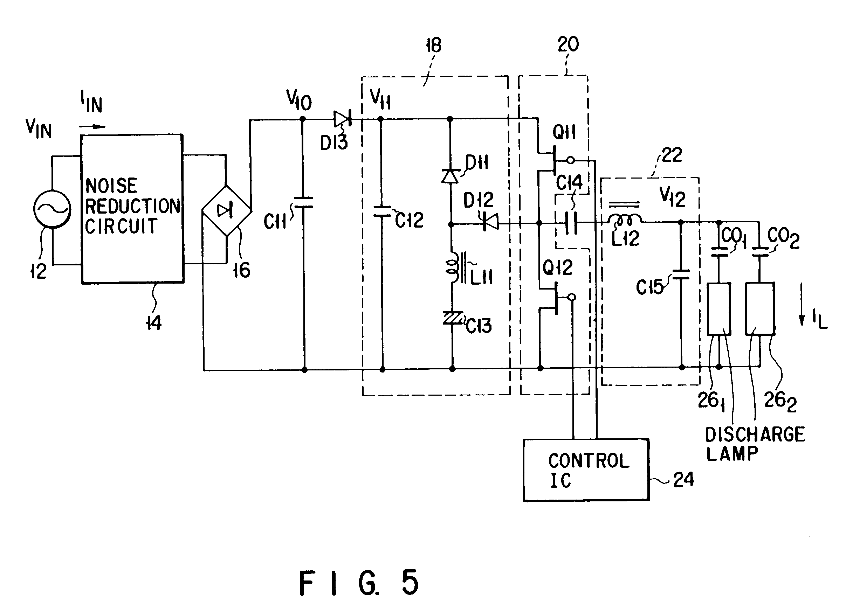

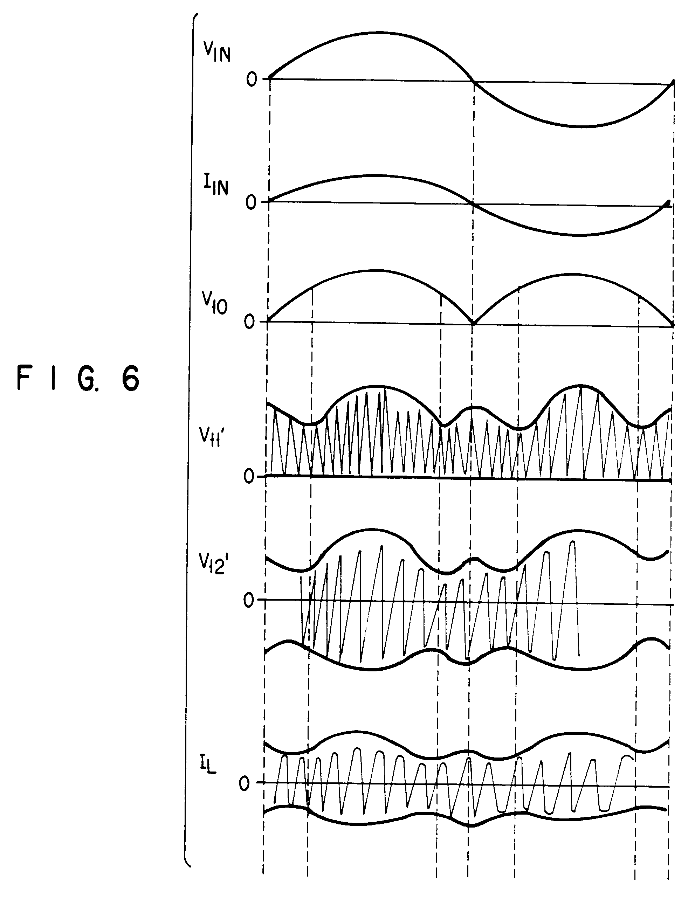

The second embodiment of the discharge lamp operating apparatus of the present invention will be described with reference to FIGS. 5 and 6.

FIG. 5 is a circuit diagram showing the second embodiment of the discharge lamp operating apparatus of the present invention, and the second embodiment is a remodeled version of the circuit shown in FIG. 3. That is, the capacitor C11, which was connected to the input side of the diode bridge circuit 16 in FIG. 3, is connected to the output side of the diode bridge circuit 16, and a switching diode D13 is connected between the capacitor C11 and the capacitor C12.

In the circuit shown in FIG. 5, ballast capacitors C0₁ and C0₂, in place of the choke coils L0₁ and L0₂, are connected to discharge lamps 26₁ and 26₂, thus forming serial circuits. When three or more capacitors and discharge lamps are connected, they are connected in parallel in the same fashion as the case of the discharge lamps 26₁ and 26₂, and the capacitors C0₁ and C0₂, and the explanation therefor will be omitted.

The operation based on the above-described structure will be described with reference to the waveform shown in FIG. 6.

An alternating current (I_{IN}) supplied from the commercial power outlet 12 having a voltage V_{IN}, is rectified by the diode bridge circuit 16, and then input to the inverter circuit 20 via the partial smoothing circuit 18. In the inverter circuit 20, a pulse current supplied from the partial smoothing circuit 18 is converted into a high-frequency current, which is further output to the resonance circuit 22. The high-frequency current output from the inverter circuit 22 is converted into a high voltage (V₁₂') by the resonance circuit 22 consisting of the capacitor C15 and the coil L12. Thereafter, the high voltage is supplied (I_{L}) to the discharge lamp 26₁ and 26₂ via the ballast capacitors C0₁ and C0₂, thereby lighting these lamps.

The partial smoothing circuit 18 charges the capacitor C13 via the diode D12 while current is being supplied from the diode bridge circuit 16 to the inverter circuit 20. When the current output from the diode bridge circuit 16 decreases, charge stored in the capacitor C13, while the voltage of the charge being raised, is supplied to the inverter circuit 20 via the coil L11 and the diode D11. Thus, the partial smoothing circuit 18 fills the troughs (reduced portions) of the current flowing to the inverter circuit 20 (V₁₀, V₁₁').

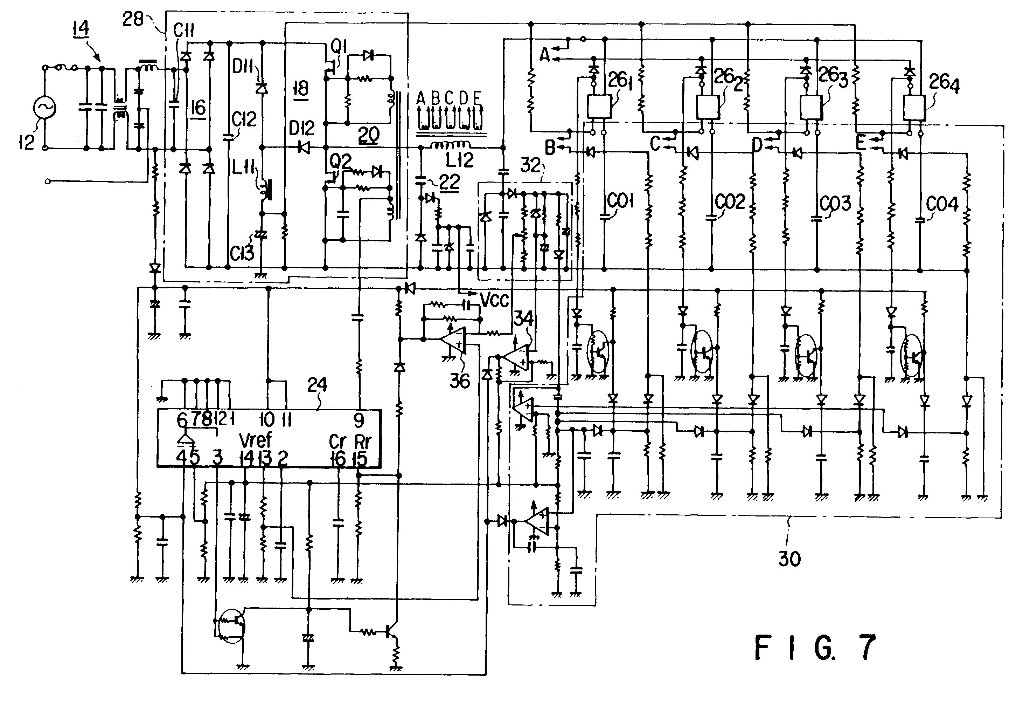

FIG. 7 is a circuit diagram illustrating the third example of the discharge lamp operating apparatus of the present invention. The main portion of the embodiment will be described.

A capacitor pumping circuit 28 is connected to the commercial power outlet 12 via the noise reduction circuit 14. The capacitor drawing circuit 28 includes the noise removing capacitor C11, the diode bridge circuit 16, and the inverter circuit 20. Further, connected to the capacitor drawing circuit 28, are discharge lamps 26₁ to 26₄ and ballast capacitors C0₁ to C0₄ through the resonance circuit 22.

The ballast capacitors C0₁ to C0₄ are included in the discharge lamp set detection circuit 30 for detecting whether or not the discharge lamps are set. An output from the discharge lamp set detection circuit 30 is supplied to the control IC24, along with an output from a resonance voltage detection circuit 32, connected to the resonance circuit 22, for detecting the resonance voltage.

The control IC24 controls the frequency of the output based on the outputs from the discharge lamp set detection circuit 30 and the resonance voltage detection circuit 32, and controls the timing of switching of FETs Q1 and Q2. By this timing control, current input to the inverter circuit is converted into a high-frequency current.

The amplifiers 34 and 36 are designed for soft-start (control at start) and frequency feedback, respectively.

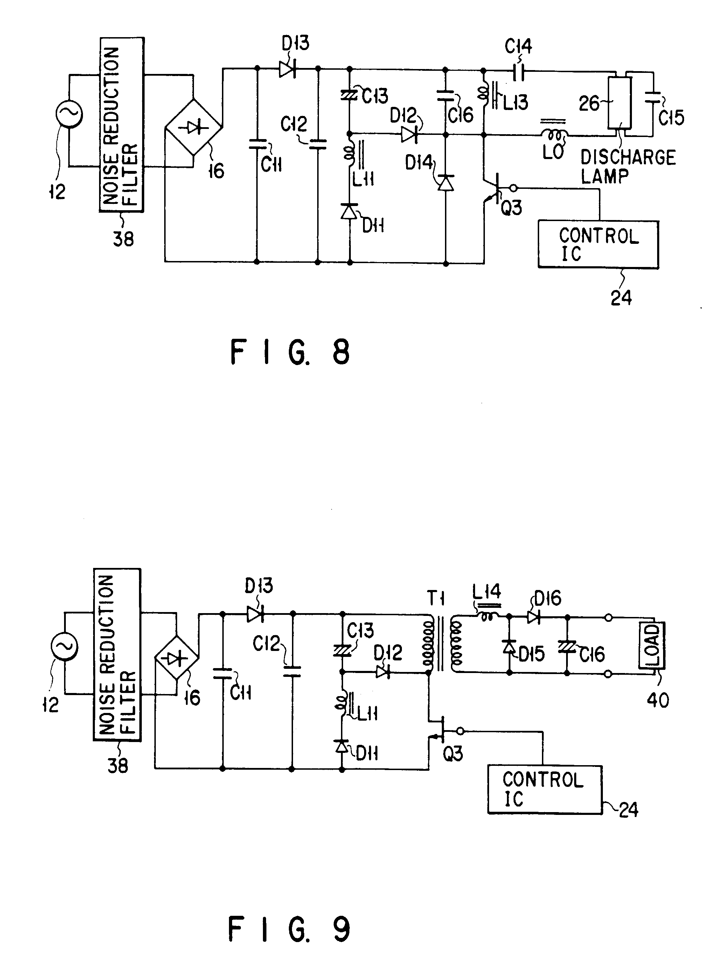

FIG. 8 is still another embodiments of the discharge lamp operating apparatus of the present invention.

FIG. 8 shows the fourth embodiment of the present invention, and is a circuit diagram illustrating a single-transistor voltage type discharge lamp operating apparatus. The basic circuit structure of this embodiment is the same as the circuits described above, and only a different section will be described.

A noise reduction filter 38 is connected between the commercial power outlet 12 and the diode bridge circuit 16. Further, a serial circuit consisting of a capacitor C13, a coil L11 and a diode D11, is connected in parallel to the capacitor C11 of the partial smoothing circuit. An anode of the diode D12 is connected to the connection point between the capacitor C13 and the coil L11. Connected as shown in this figure to a cathode of the diode D12, are transistor Q3 and ballast coil L0, which operate by switching of the capacitor C16, the diode D14, the coil L13 and the control IC 24.

Further, a discharge lamp 26, to which a filament preheat capacitor C15 is connected in parallel, is connected between an end of the capacitor C14 whose other end is connected to the anode of the switching diode D13, and the coil L0.

With the above-described structure, not only the half bridge type, but also a single-switch configuration discharge lamp lighting apparatus can be achieved.

FIG. 9 shows the fifth embodiment of the present invention, and is a diagram showing an example in which the present invention is applied to a power circuit. The basic circuit structure shown in this figure is the same as that shown in FIG. 8, and only a different section will be described.

A primary coil of a transformer T1 is connected to cathodes of the capacitor C13 and diode D12. A smoothing circuit consisting of diodes D15 and D16, and a capacitor C16, is connected to a secondary coil of the transformer T1 via a noise reduction inductance L14. A plurality of high-frequency loads 40 such as discharge lamps can be connected between the output terminals.

With the above-described structure, the present invention can be applicable not only to a discharge lamp operating apparatus, but also to a power circuit. Further, the invention can be easily applied to a general converter.

## Claims

1. An apparatus for operating a plurality of discharge lamps (26₁,26₂,26) comprising:
a rectification circuit (16), connected to alternating current power means (12), for rectifying an alternating current supplied from said alternating current power means (12);
inverter means (20), connected to said rectification circuit (16), for changing a current obtained form said rectification circuit (16) into a high-frequency current;
a resonance circuit (22) for converting the high-frequency current obtained from said inverter means (20), into a high voltage;
the plurality of discharge lamps (26₁,26₂,26) being connected to said resonance circuit (22);
characterized in that said resonance circuit (22) is provided commonly for said plurality of discharge lamps (26₁, 26₂, 26), and in that said plurality of discharge lamps (26₁, 26₂, 26) are connected in parallel between output terminals of said resonance circuit (22).

2. An apparatus according to claim 1, characterized by further comprising a partial smoothing circuit (18), connected between said rectification circuit (16) and said inverter means (20), for partially smoothing an output rectified by said rectification circuit (16), and supplying the output to said inverter means (20).

3. An apparatus for operating a plurality of discharge lamps (26₁,26₂,26) comprising:
a rectification circuit (16), connected to alternating current power means (12), for rectifying an alternating current supplied from said alternating current power means (12);
a partial smoothing circuit (18), connected in parallel to an output of said rectification circuit (16), for partially smoothing a current obtained from said rectification circuit, said partial smoothing circuit (18) including at least a capacitor (C13);
an inverter circuit (20), connected to said partial smoothing circuit (18), for changing an output smoothed by said partial smoothing circuit (18), into a high-frequency current;
a resonance circuit for converting the high-frequency current output from said inverter circuit, into a high voltage;
the plurality of discharge lamps being connected in parallel between output terminals of said resonance circuit (22);
characterized in that
said resonance circuit (22) is provided commonly for said plurality of discharge lamps (26₁ 26₂, 26), and in that said plurality of discharge lamps (26₁, 26₂, 26) are connected in parallel between output terminals of said resonance circuit (22), and in that
said partial smoothing circuit (18) reduces a capacitance of said capacitor (C13) such that a charge stored in said capacitor (C13) is substantially zero, when a current output from said rectification circuit (16) decreases.

4. An apparatus for operating a plurality of discharge lamps according to claim 3, characterized in that said inverter circuit (20) is a half bridge circuit.

5. An apparatus for operating a plurality of discharge lamps (26₁,26₂,26) comprising:
a rectification circuit (16), connected to alternating current power means (12), for rectifying an alternating current supplied from said alternating current power means (12);
inverter means (20) connected to said rectification circuit (16), for changing a current produced by said rectification circuit (16), into a high-frequency current;
resonance circuit means (22) for converting the high-frequency produced by said inverter circuit (20), into a high voltage;
the plurality of discharge lamps (26₁, 26₂, 26) being connected to said resonance circuit (22);
characterized in that
said resonance circuit (22) is provided commonly for said plurality of discharge lamps (26₁, 26₂, 26, 40), and said plurality of discharge lamps (26₁, 26₂, 26, 40) are connected in parallel between output terminals of said resonance circuit (22).

6. An apparatus according to claim 5, characterized by further comprising a partial smoothing circuit (18), connected between said rectification circuit (16) and said inverter means (20), for partially smoothing an output rectified by said rectification circuit (16), and supplying the rectified output to said inverter means (20).

7. A power converting apparatus comprising:
a rectification circuit (16), connected to alternating current power means (12), for rectifying an alternating current supplied from said alternating current power means (12);
a partial smoothing circuit (18), connected in parallel to an output of said rectification circuit (16), for partially smoothing a current obtained from said rectification circuit (16) said partial smoothing circuit including at least a capacitor (C13);
inverter means (20), connected to said partial smoothing circuit (18), for changing an output smoothed by said partial smoothing circuit (18), into a high-frequency current;
resonance circuit means (22) for converting the high-frequency current output from said inverter circuit (20), into a high voltage; and
a plurality of discharge lamps (26₁, 26₂, 26) connected in parallel between output terminals of said resonance circuit means (22);
characterized in that
said resonance circuit (22) is provided commonly for said plurality of discharge lamps (26₁, 26₂, 26, 40), and said plurality of discharge lamps (26₁, 26₂, 26, 40) are connected in parallel between output terminals of said resonance circuit (22), and in that
said partial smoothing circuit (18) reduces a capacitance of said capacitor (C13) such that a charge stored in said capacitor is substantially zero, when a current output from said rectification circuit (16) decreases.

8. A power converting apparatus according to claim 7, characterized in that said inverter circuit (20) is a half bridge circuit.

## Patentansprüche

1. Gerät zum Betreiben einer Vielzahl von Entladungslampen (26₁, 26₂, 26) mit:
einer Gleichrichtungsschaltung (16), die mit einer Wechselstromleistungseinrichtung (12) verbunden ist, um einen von der Wechselstromleistungseinrichtung (12) eingespeisten Wechselstrom gleichzurichten,
einer Invertereinrichtung (20), die mit der Gleichrichtungsschaltung (16) verbunden ist, um einen Strom, der von der Gleichrichtungsschaltung (16) erhalten ist, in einen Hochfrequenzstrom zu verändern,
einer Resonanzschaltung (22) zum Umsetzen des von der Invertereinrichtung (20) erhaltenen Hochfrequenzstromes in eine Hochspannung,
der Vielzahl von Entladungslampen (26₁, 26₂, 26), die mit der Resonanzschaltung (22) verbunden sind,
dadurch gekennzeichnet, daß die Resonanzschaltung (22) gemeinsam für die Vielzahl von Entladungslampen (26₁, 26₂, 26) vorgesehen ist, und daß die Vielzahl von Entladungslampen (26₁, 26₂, 26) parallel zwischen Ausgangsanschlüssen der Resonanzschaltung (22) angeschlossen ist.

2. Gerät nach Anspruch 1, gekennzeichnet durch weiterhin eine Teilglättungsschaltung (18), die zwischen der Gleichrichtungsschaltung (16) und der Invertereinrichtung (20) verbunden ist, um teilweise ein durch die Gleichrichtungsschaltung (16) gleichgerichtetes Ausgangssignal zu glätten und das Ausgangssignal zu der Invertereinrichtung (20) zu speisen.

3. Gerät zum Betreiben einer Vielzahl von Entladungslampen (26₁, 26₂, 26) mit:
einer Gleichrichtungsschaltung (16), die mit einer Wechselstromleistungseinrichtung (12) verbunden ist, um einen von der Wechselstromleistungseinrichtung (12) eingespeisten Wechselstrom gleichzurichten,
einer Teilglättungsschaltung (18), die parallel zu einem Ausgang der Gleichrichtungsschaltung (16) angeschlossen ist, um teilweise einen von der Gleichrichtungsschaltung erhaltenen Strom zu glätten, wobei die Teilglättungsschaltung (18) mindestens einen Kondensator (C13) enthält,
einer Inverterschaltung (20), die mit der Teilglättungsschaltung (18) verbunden ist, um einen durch die Teilglättungsschaltung (18) geglätteten Ausgang in einen Hochfrequenzstrom zu verändern,
einer Resonanzschaltung zum Umsetzen des von der Inverterschaltung ausgegebenen Hochfrequenzstromes in eine Hochspannung,
die Vielzahl von Entladungslampen, die parallel zwischen Ausgangsanschlüssen der Resonanzschaltung (22) verbunden sind,
dadurch gekennzeichnet, daß
die Resonanzschaltung (22) gemeinsam für die Vielzahl von Entladungslampen (26₁, 26₂, 26) vorgesehen ist und daß die Vielzahl von Entladungslampen (26₁, 26₂, 26) parallel zwischen Ausgangsanschlüssen der Resonanzschaltung (22) liegt, und dadurch, daß
die Teilglättungsschaltung (18) eine Kapazität des Kondensators (C13) derart reduziert, daß eine in dem Kondensator (C13) gespeicherte Ladung im wesentlichen Null ist, wenn ein von der Gleichrichtungsschaltung (16) ausgegebener Strom abnimmt.

4. Gerät zum Betreiben einer Vielzahl von Entladungslampen nach Anspruch 3, dadurch gekennzeichnet, daß die Inverterschaltung (20) eine Halbbrückenschaltung ist.

5. Gerät zum Betreiben einer Vielzahl von Entladungslampen (26₁, 26₂, 26), mit:
einer Gleichrichtungsschaltung (16), die mit einer Wechselstromleistungseinrichtung (12) verbunden ist, um einen von der Wechselstromleistungseinrichtung (12) eingespeisten Wechselstrom gleichzurichten,
einer Invertereinrichtung (20), die mit der Gleichrichtungsschaltung (16) verbunden ist, um einen Strom, der durch die Gleichrichtungsschaltung (16) erzeugt ist, in einen Hochfrequenzstrom zu ändern,
einer Resonanzschaltungseinrichtung (22) zum Umsetzen der durch die Inverterschaltung (20) erzeugten Hochfrequenz in eine Hochspannung,
die Vielzahl von Entladungslampen (26₁, 26₂, 26), die mit der Resonanzschaltung (22) verbunden sind,
dadurch gekennzeichnet, daß
die Resonanzschaltung (22) gemeinsam für die Vielzahl von Entladungslampen (26₁, 26₂, 26, 40) vorgesehen ist und die Vielzahl von Entladungslampen (26₁, 26₂, 26, 40) parallel zwischen Ausgangsanschlüssen der Resonanzschaltung (22) liegt.

6. Gerät nach Anspruch 5, gekennzeichnet durch weiterhin eine Teilglättungsschaltung (18), die zwischen der Gleichrichtungsschaltung (16) und der Invertereinrichtung (20) verbunden ist, um teilweise ein Ausgangssignal, das durch die Gleichrichtungsschaltung (16) gleichgerichtet ist, zu glätten und das gleichgerichtete Ausgangssignal in die Invertereinrichtung (20) einzuspeisen.

7. Leistungsumsetzungsgerät mit:
einer Gleichrichtungsschaltung (16), die mit einer Wechselstromleistungseinrichtung (12) verbunden ist, um einen von der Wechselstromleistungseinrichtung (12) eingespeisten Wechselstrom gleichzurichten,
einer Teilglättungsschaltung (18), die parallel zu einem Ausgang der Gleichrichtungsschaltung (16) angeschlossen ist, um teilweise einen von der Gleichrichtungsschaltung (16) erhaltenen Strom zu glätten, wobei die Teilglättungsschaltung wenigstens einen Kondensator (C13) umfaßt,
einer mit der Teilglättungsschaltung (18) verbundenen Invertereinrichtung (20) zum Ändern eines durch die Teilglättungsschaltung (18) geglätteten Ausgangssignales in einen Hochfrequenzstrom,
einer Resonanzschaltungseinrichtung (22) zum Umsetzen des von der Inverterschaltung (20) ausgegebenen Hochfrequenzstromes in eine Hochspannung, und
einer Vielzahl von Entladungslampen (26₁, 26₂, 26), die parallel zwischen Ausgangsanschlüssen der Resonanzschaltungseinrichtung (22) verbunden sind,
dadurch gekennzeichnet, daß
die Resonanzschaltung (22) gemeinsam für die Vielzahl von Entladungslampen (26₁, 26₂, 26, 40) vorgesehen ist und die Vielzahl von Entladungslampen (26₁, 26₂, 26, 40) parallel zwischen Ausgangsanschlüssen der Resonanzschaltung (22) liegt, und dadurch, daß
die Teilglättungsschaltung (18) eine Kapazität des Kondensators (C13) derart reduziert, daß eine in dem Kondensator gespeicherte Ladung im wesentlichen Null ist, wenn ein von der Gleichrichtungsschaltung (16) ausgegebener Strom abnimmt.

8. Leistungsumsetzungsgerät nach Anspruch 7, dadurch gekennzeichnet, daß die Inverterschaltung (20) eine Halbbrückenschaltung ist.

## Revendications

1. Appareil de commande d'une pluralité de lampes à décharge (26₁, 26₂, 26) équipé :
d'un circuit de redressement (16) qui est relié à un dispositif de puissance de courant alternatif (12), afin de redresser un courant alternatif délivré par le dispositif de puissance de courant alternatif (12),
d'un dispositif inverseur (20), qui est relié au circuit de redressement (16), afin de convertir un courant, qui est obtenu du circuit de redressement (16), en un courant haute fréquence,
d'un circuit résonnant (22) pour la conversion du courant à haute fréquence obtenu par le dispositif inverseur (20) en une tension élevée,
de la pluralité de lampes à décharge (26₁, 26₂, 26) qui sont reliées au circuit résonnant (22),
caractérisé en ce que le circuit résonnant (22) est prévu conjointement pour la pluralité de lampes à décharge (26₁, 26₂, 26), et en ce que la pluralité de lampes à décharge (26₁, 26₂, 26) est montée en parallèle entre les bornes de sortie du circuit résonnant (22).

2. Appareil selon la revendication 1, caractérisé en outre par un circuit de filtrage partiel (18), qui est monté entre le circuit de redressement (16) et le dispositif inverseur (20), afin de filtrer partiellement un signal de sortie redressé par le circuit de redressement (16) et de délivrer le signal de sortie au dispositif inverseur (20).

3. Appareil de commande d'une pluralité de lampes à décharge (26₁, 26₂, 26) équipé :
d'un circuit de redressement (16) qui est relié à un dispositif de puissance de courant alternatif (12), afin de redresser un courant alternatif délivré par le dispositif de puissance de courant alternatif (12),
d'un circuit de filtrage partiel (18) qui est relié en parallèle à une sortie du circuit de redressement (16), afin de filtrer partiellement un courant obtenu par le circuit de redressement, le circuit de filtrage partiel (18) comportant au moins un condensateur (C13),
d'un circuit inverseur (20), qui est relié au circuit de filtrage partiel (18), afin de modifier une sortie filtrée par le circuit de filtrage partiel (18) en un courant à haute fréquence,
d'un circuit résonnant pour la conversion du courant à haute fréquence délivré par le circuit inverseur en une tension élevée,
de la pluralité de lampes à décharge, qui sont montées en parallèle entre les bornes de sortie du circuit résonnant (22),
caractérisé en ce que
le circuit résonnant (22) est prévu conjointement pour la pluralité de lampes à décharge (26₁, 26₂, 26) et en ce que la pluralité de lampes à décharge (26₁, 26₂, 26) se trouve en parallèle entre les bornes de sortie du circuit résonnant (22), et en ce que
le circuit de filtrage partiel (18) réduit une capacité du condensateur (C13) de telle sorte qu'une charge stockée dans le condensateur (C13) est sensiblement nulle, lorsqu'un courant délivré par le circuit de redressement (16) diminue.

4. Appareil de commande d'une pluralité de lampes à décharge selon la revendication 3, caractérisé en ce que le circuit inverseur (20) est un circuit en demi-pont.

5. Appareil de commande de lampes à décharge (26₁, 26₂, 26) équipé :
d'un circuit de redressement (16), qui est relié à un dispositif de puissance de courant alternatif (12), afin de redresser un courant alternatif délivré par le dispositif de puissance de courant alternatif (12),
d'un dispositif inverseur (20), qui est relié au circuit de redressement (16) afin de modifier un courant, qui est créé par le circuit de redressement (16), en un courant à haute fréquence,
d'un dispositif de circuit résonnant (22) en vue de la conversion de la haute fréquence générée par le circuit inverseur (20) en une tension élevée,
de la pluralité de lampes à décharge (26₁, 26₂, 26), qui sont reliées au circuit résonnant (22),
caractérisé en ce que
le circuit résonnant (22) est prévu conjointement pour la pluralité de lampes à décharge (26₁, 26₂, 26, 40) et la pluralité de lampes à décharge (26₁, 26₂, 26, 40) se trouve en parallèle entre les bornes de sortie du circuit résonnant (22).

6. Appareil selon la revendication 5, caractérisé en outre par un circuit de filtrage partiel (18), qui est monté entre le circuit de redressement (16) et le dispositif inverseur (20), afin de filtrer partiellement un signal de sortie, qui est redressé par le circuit de redressement (16) et d'appliquer le signal de sortie redressé au dispositif inverseur (20).

7. Appareil de conversion de puissance équipé :
d'un circuit de redressement (16), qui est relié à un dispositif de puissance de courant alternatif (12), afin de redresser un courant alternatif délivré par le dispositif de puissance de courant alternatif (12),
d'un circuit de filtrage partiel (18) qui est relié en parallèle sur une sortie du circuit de redressement (16), afin de filtrer partiellement un courant obtenu par le circuit de redressement (16), le circuit de filtrage partiel comportant au moins un condensateur (C13),
d'un dispositif inverseur (20) relié au circuit de filtrage partiel (18) en vue de la modification d'un signal de sortie filtré par le circuit de filtrage partiel (18) en un courant à haute fréquence,
d'un dispositif de circuit résonnant (22) en vue de la conversion du courant à haute fréquence délivré par le circuit inverseur (20) en une tension élevée, et
une pluralité de lampes à décharge (26₁, 26₂, 26), qui sont montées en parallèle entre les bornes de sortie du dispositif de circuit résonnant (22),
caractérisé en ce que
le circuit résonnant (2) est prévu conjointement pour la pluralité de lampes à décharge (26₁, 26₂, 26, 40) et la pluralité de lampes à décharge (26₁, 26₂, 26, 40) se trouve en parallèle entre les bornes de sortie du circuit résonnant (22), et en ce que
le circuit de filtrage partiel (18) réduit une capacité du condensateur (C13) de telle sorte qu'une charge emmagasinée dans le condensateur est sensiblement nulle, lorsqu'un courant délivré par le circuit de redressement (16) diminue.

8. Appareil de conversion de puissance selon la revendication 7, caractérisé en ce que le circuit inverseur (20) est un circuit en demi-pont.
